Europäisches Patentamt

European Patent Office

Office européen des brevets

(11) Veröffentlichungsnummer: **0 264 667 B1**

# EUROPÄISCHE PATENTSCHRIFT

(45) Veröffentlichungstag der Patentschrift: **02.12.92**

(51) Int. Cl.⁵: **G02F 1/137**

(21) Anmeldenummer: **87114162.8**

(22) Anmeldetag: **29.09.87**

(54) Flüssigkristallanzeigezelle.

(30) Priorität: **24.10.86 CH 4234/86**

(43) Veröffentlichungstag der Anmeldung:
**27.04.88 Patentblatt 88/17**

(45) Bekanntmachung des Hinweises auf die
Patenterteilung:
**02.12.92 Patentblatt 92/49**

(84) Benannte Vertragsstaaten:
**AT BE CH DE ES FR GB IT LI NL SE**

(56) Entgegenhaltungen:
**EP-A- 0 023 796**
**DE-C- 3 138 518**
**US-A- 4 039 252**

**PATENT ABSTRACTS OF JAPAN, Band 10,
Nr. 111 (P-451)[2168], 25. April 1986; & JP-
A-60 243 634**

(73) Patentinhaber: **F. HOFFMANN-LA ROCHE AG**
**Postfach 3255**
**CH-4002 Basel(CH)**

(72) Erfinder: **Leenhouts, Frans, Dr.**
**Violaweg 73**
**CH-4303 Kaiseraugst(CH)**

(74) Vertreter: **Finkener und Ernesti Patentanwälte**
**Heinrich-König-Strasse 119**
**W-4630 Bochum 1(DE)**

EP 0 264 667 B1

**Beschreibung**

Die Erfindung betrifft eine Flüssigkristallanzeigezelle bestehend aus einer verdrillten nematischen Flüssigkristallschicht, die zwischen zwei mit Elektroden und Oberflächenorientierungen versehenen Platten und Polarisatoren angeordnet ist, und die eine positive dielektrischen Anisotropie aufweist.

Die Erfindung betrifft insbesondere eine Flüssigkristallanzeigezelle der obenerwähnten Art, bei der die nematische Flüssigkristallschicht einen geringen optischen Gangunterschied aufweist.

Es ist bekannt, dass Flüssigkristallanzeigezelle zur Erzielung eines hohen Multiplexverhältnisses eine steile elektro-optische Charakteristik aufweisen müssen. Die entsprechende Entwicklung konzentrierte sich auf hochverdrillte nematische Strukturen. Unter hochverdrillten nematischen Strukturen versteht man dabei solche, die um mehr als 90° verdrillt sind. Es versteht sich, dass zur Erzielung einer derartigen Verdrillung eine Dotierung mit chiralen Zusätzen in der Regel erforderlich ist.

Die Vorteile der Flüssigkristallzellen mit hochverdrillten nematischen Strukturen liegen vor allem in einer besonders steilen elektro-optischen Charakteristik und einem grossen Sichtwinkelbereich. Die steile elektro-optische Charakteristik führt zu hohen Multiplexverhältnissen, die zur Verwirklichung von Anzeigen mit hoher Informationsdichte notwending sind.

Dabei wurde weitgehend ausser Acht gelassen, dass für bestimmte Anwendungen nicht das hohe Multiplexverhältnis, sondern die Möglichkeit der Erzielung einer möglichst differenzierten Grauskala im Vordergrund steht. Dies ist speziell beispielsweise für Fernsehanwendungen der Fall.

Die Bedeutung einer Grauskala für die Projektion von Farbbildern geht aus EP-A 23 796 hervor. Diese Druckschrift beschreibt ein Projektionssystem, bei dem ein Projektionsstrahl in einer Flüssigkristallzelle mittels einer Bildinformation moduliert wird, die in einem zweiten, auf der anderen Seite der Flüssigkristallzelle einfallenden Strahl enthalten ist. Es handelt sich also um ein verhältnismässig komplexes System, bei dem die prinzipielle Einfachheit von Flüssigkristallanzeigezellen nicht mehr zum Tragen kommt.

Der Erfindung liegt daher die Aufgabe zugrunde, eine Flüssigkristallanzeigezelle bereitzustellen, die eine speziell geringe Steilheit der elektro-optischen Charakteristik aufweist.

Erfindungsgemäss wird dies erreicht durch eine Flüssigkristallanzeigezelle der eingangs erwähnten Art, die sich auszeichnet durch die Kombination aus einem Verdrillungswinkel $\phi$ zwischen 10° und 80°, einem Winkel $\theta$ zwischen der Richtung der Oberflächenorientierung und Polarisationsrichtung an der lichteinfallsseitigen Platte von -30° bis 60°, einem Winkel $\Psi$ zwischen den Polarisationsrichtungen der beiden Polarisatoren von 80° bis 110° und einem optischen Gangunterschied $\Delta n \cdot d$ von 0,2 bis 0.7 $\mu m$.

Für den Zweck dieser Beschreibung sind die angegebenen Winkel wie folgt zu verstehen: Der Verdrillungswinkel ist der Winkel, den die durch die beiden nematischen Direktoren auf der vorderen, lichteinfallsseitigen und auf der rückseitigen Platte definierten, zu den Platten senkrechten Ebenen miteinander einschliessen, bzw. mit anderen Worten, um den die nematischen Direktoren gegeneinander verdreht sind. Diese Definition entspricht der im Fachgebiet üblichen Bezeichnung.

Der Winkel $\theta$ ist der Winkel zwischen der Oberflächenorientierung auf der vorderen Platte bzw. dem nematischen Direktor $n_1$ an dieser Platte und der Polarisationsrichtung des dieser Platte zugeordneten Polarisators. Positive Werte des Winkels $\theta$ geben an, dass die Polarisationsrichtung ausserhalb des Winkels $\phi$ liegt, negative Werte für $\theta$ geben eine Polarisationsrichtung an, die zwischen den nematischen Direktoren liegt.

Der Winkel $\Psi$ ist der Winkel, um den die Polarisatoren gegeneinander verdreht sind. Als gekreuzt werden die Polarisatoren bezeichnet, wenn sie ohne zwischen ihnen erfolgende Lichtbeeinflussung den Lichtdurchgang weitgehend sperren. Das bedeutet, dass sich der Begriff "gekreuzt" nicht ausschliesslich auf eine Verdrehung von 90° beschränkt, sondern alle hier in Betracht kommenden Werte von $\Psi$ umfasst.

Die so gebildete Zelle ergibt eine positive Kontrastdarstellung und ist vor allem für niedrige Werte von d$\Delta$n und $\theta \neq 0$ überraschenderweise nicht farbig.

Bei positiver Kontrast-Darstellung erscheinen elektrisch angesteuerte Segmente dunkel auf hellem Hintergrund: bei negativer Kontrast-Darstellung ist die Situation umgekehrt.

Im folgenden werden anhand der beiliegenden Zeichnungen Ausführungsbeispiele der Erfindung beschrieben. Es zeigen

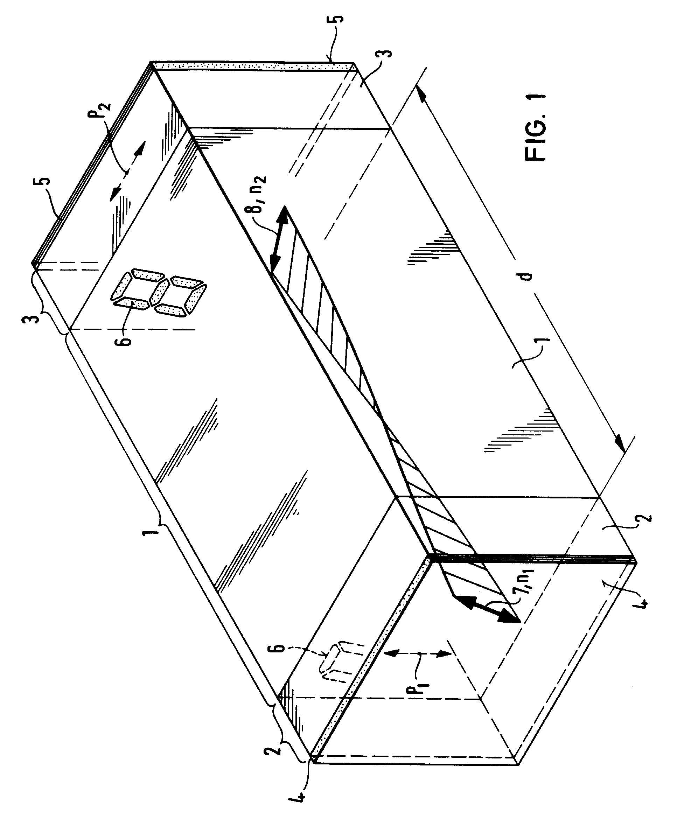

Figur 1      eine schematische, auseinandergezogene Darstellung einer Flüssigkristallanzeigezelle nach der Erfindung

Figur 2      ein Diagramm der Winkelanordnung, der Oberflächenorientierungen und der Polarisatoren zueinander

Figur 3      eine Spannungs-Kontrastkurve für eine bevorzugte Ausführungsform.

Die vorliegende Flüssigkristallanzeigezelle ist weitgehend ähnlich aufgebaut wie bekannte Zellen, z.B. Twisted Nematic LCDs (Schadt und Helfrich, Appl. Phys. Lett. 18, 127 [1971]), sodass auf den Aufbau hier nicht im einzelnen eingegangen werden muss. Sie besteht aus einer Flüssigkristallschicht 1, die zwischen zwei im wesentlichen zueinander planparallelen Platten 2,3 aus durchsichtigem Material, z.B. Glas, Acrylglas, Kunststoffolien etc., angeordnet ist. Vor der vorderen Platte 3 befindet sich ein Polarisator 4, der vorzugsweise mit der Platte verbunden, beispielsweise aufgeklebt ist. Entsprechend ist der hinteren Platte 3 ein Polarisator 5 zugeordnet. Die Platten haben einen Abstand d voneinander.

Auf ihren dem Flüssigkristall zugewandten Oberflächen weisen die Platten 2,3 die üblichen, zur Darstellung von Zeichen oder Bildpunkten segmentierten Elektrodenbeschichtungen 6 auf. Ausserdem sind die Oberflächen so behandelt, dass sie auf die angrenzenden Flüssigkristallmoleküle eine Richtwirkung ausüben und damit die Richtung des nematischen Direktors n bestimmen. Diese Behandlung besteht beispielsweise im Reiben der Oberfläche in einer Richtung oder im Schrägaufdampfen orientierender Schichten, etc., wobei es zwar nicht erforderlich aber auch nicht nachteilig ist, einen Kippwinkel vorzusehen. Das Ergebnis dieser Behandlung wird für den Zweck dieser Beschreibung als Oberflächenorientierung bezeichnet. Die Oberflächenorientierung auf der vorderen Platte 2 ist durch den Pfeil 7 dargestellt. Auf der hinteren Platte 3 ist die Oberflächenorientierung gegenüber derjenigen auf der vorderen Platte verdreht und durch den Pfeil 8 gekennzeichnet.

Der zur vorderen Platte gehörige Polarisator 4 ist so angeordnet, dass seine Polarisationsrichtung relativ zum Verdrillungswinkel nach aussen einen bestimmten Winkel einschliesst, auf den im weiteren noch genauer eingegangen wird. Auf der hinteren Seite ist der Polarisator 5 so angeordnet, dass seine Polarisationsrichtung mit der des ersten Polarisators gekreuzt ist.

Der Flüssigkristall 1 ist ein nematischer Flüssigkristall, der mit chiralen Zusätzen dotiert sein kann.

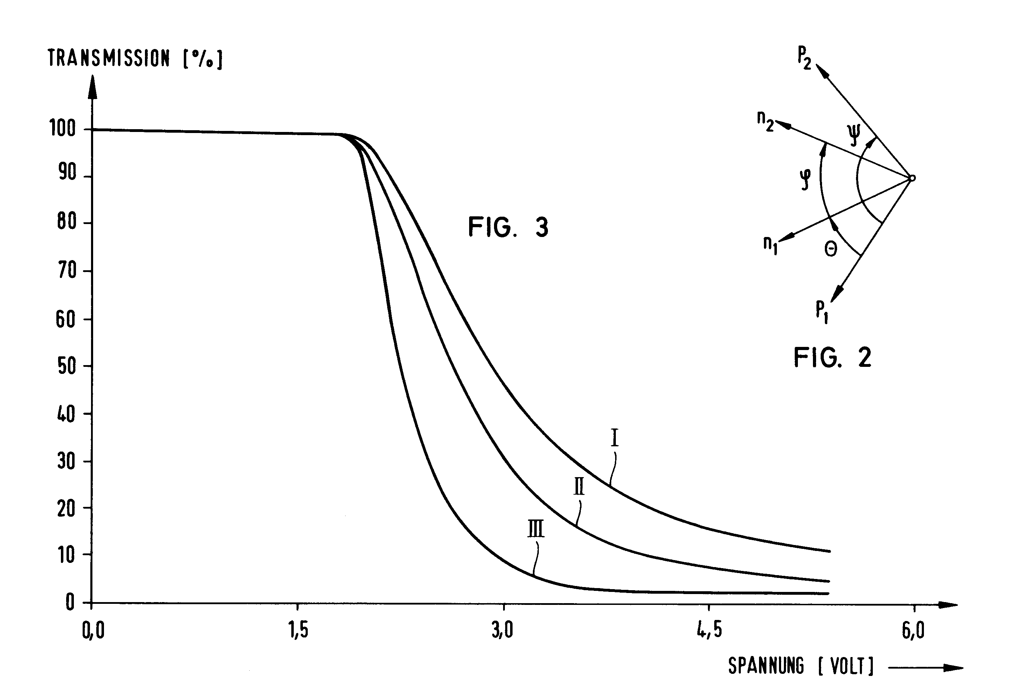

In Figur 2 sind die Winkelverhältnisse der nematischen Direktoren und der Polarisationsrichtungen zueinander dargestellt. Mit $n_1$ ist, wie erwähnt, der nematische Direktor an der vorderen Platte 2, mit $n_2$ der nematische Direktor an der rückseitigen Platte 3 bezeichnet. Der Verdrillungswinkel zwischen den beiden nematischen Direktoren ist mit $\phi$ bezeichnet. Dieser Winkel ist im vorliegenden Ausführungsbeispiel ca. 50°. Er kann aber nach oben und nach unten abweichen. Gute Ergebnisse werden mit Absolutwerten von $\phi$ erzielt, die bei rechtssinniger oder linkssinniger Verdrillung zwischen 10° und 80°, vorzugsweise zwischen 20 und 60°, besonders bevorzugt zwischen 30° und 50° liegen.

Die Polarisationsrichtung des vorderseitigen Polarisators 4 ist mit $P_1$ bezeichnet. Sie ist beim vorliegenden Ausführungsbeispiel um einen Winkel $\theta = 20°$ gegenüber dem nematischen Direktor $n_1$ verdreht. Die Polarisationsrichtung $P_1$ des vorderen Polarisators 4 kann aber um einen Winkel $\theta$ im Bereich $-30° \leq \theta \leq 60°$ vom nematischen Direktor $n_1$ abweichen. Die Polarisatoren können also symmetrisch zu den nematischen Direktoren angeordnet werden. Die Bedingung hierfür ist $\theta = (90°-\phi)/2$, sofern $\Psi = 90°$. Die Symmetrie ist bevorzugt, aber nicht zwingend. Die Polarisationsrichtung $P_2$ des hinteren Polarisators 5 ist gegenüber jener des vorderen Polarisators $P_1$ um einen Winkel $\Psi$ verdreht, der im bevorzugten Ausführungsbeispiel 90° beträgt. Dieser Winkel kann aber mit guten Ergebnissen zwischen 80° und 110° liegen. Die Polarisationsrichtungen $P_1$ und $P_2$ können auch ohne negativen Einfluss auf die Ergebnisse niteinander vertauscht werden.

In einer weiteren bevorzugten Ausführungsformen ist z.B. $\phi = 30°$, $\theta = 30°$, $\Psi = 90°$, wobei folgende Flüssigkristallmischung (Mischung "A) in d = 3,4 $\mu$m dicker Schicht verwendet wurde:

Mischung "A"

| Komponente | | Konzentration (Gew.%) |
|---|---|---|
| ød(4)CP | p-[trans-4-(4-Pentenyl)cyclo-hexyl]benzonitril | 8,000 |
| 5CP | p-(trans-4-Pentylcyclohexyl)-benzonitril | 11,000 |
| 4P(1)P | p-(5-Butyl-2-pyrimidinyl)-benzonitril | 3,000 |
| 5CAPO2 | p-[2-(trans-4-pentylcyclohexyl)-äthyl]-äthoxybenzol | 6,000 |
| 3CEC3 | trans-4-Propylcyclohexancarbon-säure-trans-4-propylcyclohexyl-ester | 8,000 |
| 4CEC4 | trans-4-Butylcyclohexancarbon-säure-trans-4-butylcyclohexyl-ester | 11,000 |
| 5CEC3 | trans-4-Pentylcyclohexancarbon-säure-trans-4-propylcyclohexyl-ester | 11,000 |
| 5CPAC4 | 1-[2-(trans-4-Butylcyclohexyl)-äthyl]-4-(trans-4-pentylcyclo-hexyl)benzol | 9,500 |
| 5CPPAC4 | 4-[2-(trans-4-Butylcyclohexyl)-äthyl]-4'-(trans-4-pentyl-cyclo-hexyl)biphenyl | 5,500 |
| 5CPAPAC4 | 4-(trans-4-Pentylcyclohexyl)-4'-[2-(trans-4-butylcyclohexyl)-äthyl]-1,1'-äthylendibenzol | 7,000 |
| 4CEPO2 | trans-4-Butylcyclohexancarbon-säure-p-äthoxy-phenylester | 11,000 |
| 5CEPO1 | trans-4-Pentylcyclohexancarbon-säure-p-methoxyhexylester | 9,000 |

Ein zweites Ausführungsbeispiel wurde mit der folgenden Mischung "B" hergestellt:

4

Mischung "B"

| Komponente | | Konzentration (Gew.%) |
|---|---|---|
| 4P(1)P | p-(5-Butyl-2-pyrimidinyl)-benzonitril | 8,820 |
| Ød(3)CP | p-[trans-4-(3-Butenyl)-cyclohexyl]benzonitril | 7,390 |
| 1d(3)CP | p-[trans-4-(3E-Pentenyl)-cyclohexyl]benzonitril | 7,420 |
| Ød(4)CPP | 4'-[trans-4-(4-Pentenyl)-4-biphenylcarbonitril | 6, 170 |
| 3CEC3 | trans-4-Propylcyclohexancarbon-säure-trans-4-propylcyclohexyl ester | 21, 050 |
| 4CEC4 | trans-4-Butylcyclohexancarbon-säure-trans-4-butylcyclo-hexylester | 28,100 |
| 5CEC3 | trans-4-Pentylcyclohexancarbon-säure-trans-4-propylcyclo-hexylester | 21,050 |

Die Bezeichnungsweise der Komponenten ist dem Fachmann bekannt. Es wird hierfür z.B. auf die Publikationen von Schadt, M. et al. in Mol. Cryst. Lig. Cryst. 122 (1985) 241ff und in Proc. Int. Displ. Res. Conf., San Diego (1985) verwiesen.

In der folgenden Tabelle 1 sind die relevanten Parameter dieser beiden Mischungen "A" und "B" zusammengestellt.

Tabelle 1

| | Mischung "A" | Mischung "B" |
|---|---|---|
| Klärpunkt $T_{Cl}$ [°C] | 72 | 42,5 |
| Schmelzpunkt $T_m$ [°C] | <-20 | <0 |
| $n_o$ | 1,432 | 1,476 |
| Optische Anisotropie $\Delta n$ | 0,086 | 0,072 |
| Viskosität η (bei 22°C) [m Pa. s] | 23 | 21 |

Mit diesen Mischungen wurden die in der folgenden Tabelle 2 zusammengestellten elektro-optischen Resultate erzielt. Den Ergebnissen, die mit der vorliegenden neuen Zelle erreicht wurden, sind jeweils die Werte gegenübergestellt, die mit den gleichen Flüssigkristallmischungen in einer konventionellen Drehzelle (jeweils dritte Spalte) erzielt wurden.

## Tabelle 2

### Mischung "A"

|  | $\varphi=30°$ $\theta=30$ $\psi=90$ | $\varphi=60$ $\theta=15$ $\psi=90$ | $\varphi=90$ $\theta=0$ $\psi=90$ |
|---|---|---|---|
| $V_{10}$ (Volt) | 2,165 | 2,058 | 1,971 |
| $V_{50}$ (Volt) | 2,895 | 2,617 | 2,265 |
| $P_0$ | 0,337 | 0,271 | 0,149 |
| d [$\mu$m] | 3,4 | 3,8 | 4,0 |
| d$\Delta$n [$\mu$m] | 0,29 | 0,33 | 0,34 |

### Mischung "B"

|  | $\varphi=30°$ $\theta=30$ $\psi=90$ | $\varphi=60$ $\theta=15$ $\psi=90$ | $\varphi=90$ $\theta=0$ $\psi=90$ |
|---|---|---|---|
| $V_{10}$ (Volt) | 1,562 | 1,614 | 1,441 |
| $V_{50}$ (Volt) | 2,092 | 2,015 | 1,671 |
| $P_0$ | 0,339 | 0,248 | 0,159 |
| d [$\mu$m] | 4,5 | 6,0 | 7,0 |
| d$\Delta$n [$\mu$m] | 0,32 | 0,43 | 0,50 |

Von den in Tabelle 2 zusammengestellten Parameter bedeuten:
- $V_{10}$ die optische Schwellenspannung bei 10% Extinktion bzw. 90% Transmission
- $V_{50}$ die Spannung bei 50% Extinktion oder Transmission
- $P_0$ die Steilheit der Transmissionskurve bei einem Lichteinfalls- oder Sichtwinkel $\beta=0°$ gemäss der Formel

$$P_0 = \frac{V_{50} - V_{10}}{V_{10}}$$

In Figur 3 sind die für das elektro-optische Verhalten charakteristischen Kontrastkurven im Vergleich zur klassischen Drenzelle gezeigt, die mit weissem Licht aufgenommen wurden, nämlich für $\phi = 30°$, $\theta = 30.$ $\Psi = 90°$ (Kurve I), für $\phi = 60°$, $\theta = 15°$, $\Psi = 90°$ (Kurve II) und für $\phi = 90°$, $\theta = 0°$, $\Psi = 90°$ (Drehzelle, Kurve III). Es ist ersichtlich, dass mit zunehmendem Verdrillungswinkel die Kurve steiler wird.

Die oben beschriebene Zelle kann sowohl in Transmission als auch in Reflexion betrieben werden.

**Patentansprüche**

1. Flüssigkristallanzeigezelle aus einem zwischen zwei Elektroden (6) und Oberflächenorientierungen versehenen Platten (2,3) und Polarisatoren (4,5) angeordneten verdrillten nematischen Flüssigkristall (1) mit positiver dielektrischer Anisotropie, einem Verdrillungswinkel $\phi$ von 10° bis 80°, einem Winkel $\theta$ zwischen der Richtung der Oberflächenorientierung und der Polarisationsrichtung an einer der beiden Platten (2) von -30° bis 60°, wobei negative Werte für $\theta$ bedeuten, dass die genannte Polarisationsrichtung innerhalb des durch den Verdrillungswinkel $\phi$ gebildeten Bereiches liegt, dadurch gekennzeichnet, dass der Winkel $\Psi$ zwischen den Polarisationsrichtungen der beiden Polarisatoren (4,5) 80° bis 110° und das als optischer Gangunterschied bezeichnete Produkt $\triangle n \bullet d$, aus der optischen Anisotropie $\triangle n$ und der Dicke d des Flüssigkristalls 0,2 bis 0,7 $\mu$m betragen.

2. Flüssigkristallanzeigezelle nach Anspruch 1, gekennzeichnet, durch einen optischen Gangunterschied $\triangle nd$ von 0,3 bis 0,5$\mu$m.

3. Flüssigkristallanzeigezelle nach Anspruch 1, gekennzeichnet, durch einen Verdrillungswinkel $\phi$ zwischen 20° und 60°.

4. Flüssigkristallanzeigezelle nach Anspruch 3, gekennzeichnet, durch einen Verdrillungswinkel $\phi$ zwischen 30° und 50°.

5. Flüssigkristallanzeigezelle nach Anspruch 1, dadurch gekennzeichnet, dass der Winkel $\theta$ durch die Bedingung $\theta = (90° - \phi)/2$ definiert ist, wobei der Winkel zwischen den Po larisatoren $\Psi = 90°$.

6. Flüssigkristallanzeigezelle nach Anspruch 1, gekennzeichnet durch einen Winkel $\theta$ zwischen 0° und 60°.

7. Flüssigkristallanzeigezelle nach Anspruch 1, gekennzeichnet durch einen Winkel $\theta$ zwischen -30° und 0°.

8. Flüssigkristallanzeigezelle nach Anspruch 1, gekennzeichnet durch einen Winkel $\Psi$ von 90°.

**Claims**

1. A liquid crystal display (LCD) cell comprising a twisted nematic liquid crystal (1) disposed between two plates (2, 3) and polarizers having electrodes (6) and surface orientations, the liquid crystal having a positive dielectric anisotropy, a twist angle $\phi$ of from 10° to 80°, an angle $\theta$ between the surface orientation direction and the polarization direction at one of the two plates (2) from -30° to 60°, negative angles of $\theta$ meaning that the said polarization direction lies within the area formed by the twist angle $\phi$, characterised in that the angle $\Psi$ between the polarization directions of the two polarizers (4, 5) is from 80° to 110°, and the optical path difference being the product $\triangle n.d$ of the optical anisoptropy $\triangle n$ and the thickness d of the liquid crystal is from 0.2 to 0.7 $\mu$m.

2. A cell according to claim 1, characterized by an optical path difference $\triangle nd$ of from 0.3 to 0.5 $\mu$m.

3. A cell according to claim 1, characterized by a twist angle $\phi$ of from 20° to 60°.

4. A cell according to claim 3, characterized by a twist angle $\phi$ of from 30° to 50°.

5. A cell according to claim 1, characterized in that the angle $\theta$ is defined by the condition $\theta$ = (90° - $\phi$)/2, the angle $\Psi$ between the polarizers being 90°.

6. A cell according to claim 1, characterized by an angle $\theta$ of from 0° to 60°.

7. A cell according to claim 1, characterized by an angle $\theta$ of from -30° to 0°.

8. A cell according to claim 1, characterized by an angle $\Psi$ of 90°.

**Revendications**

1. Cellule d'affichage à cristaux liquides constituée d'un cristal liquide (1) nématique torsadé disposé entre deux plaques (2, 3) munies d'électrodes (6) et d'orientations de surface et deux polariseurs (4, 5), ce cristal liquide (1) ayant une anisotropie diélectrique positive, un angle de torsion $\phi$ de 10° à 80°, un angle $\theta$ entre la direction de l'orientation de surface et la direction de polarisation sur l'une des deux plaques (2) de -30° à 60°, où les valeurs négatives pour $\theta$ signifient que la direction de polarisation mentionnée se situe à l'intérieur du domaine formé par l'angle de torsion $\phi$ , caractérisée en ce que l'angle $\Psi$ entre les directions de polarisation des deux polariseurs (4, 5) est compris entre 80° et 110° et en ce que le produit $\triangle$n.d de l'anisotropie optique $\triangle$n et de l'épaisseur d du cristal liquide décrit comme différence de pas optique s'élève à 0,2 à 0,7 $\mu$m.

2. Cellule d'affichage à cristaux liquides selon la revendication 1, caractérisée par une différence de pas optique $\triangle$nd de 0,3 à 0,5 $\mu$m.

3. Cellule d'affichage à cristaux liquides selon la revendication 1, caractérisée par un angle de torsion $\phi$ compris entre 20° et 60°.

4. Cellule d'affichage à cristaux liquides selon la revendication 3, caractérisée par un angle de torsion $\phi$ compris entre 30° et 50°.

5. Cellule d'affichage à cristaux liquides selon la revendication 1, caractérisée en ce que l'angle $\theta$ est défini par la condition $\theta$ = (90° - $\phi$ )/2 , où l'angle entre les polariseurs $\Psi$ = 90°.

6. Cellule d'affichage à cristaux liquides selon la revendication 1, caractérisée par un angle $\theta$ compris entre 0° et 60°.

7. Cellule d'affichage à cristaux liquides selon la revendication 1, caractérisée par un angle $\theta$ compris entre -30° et 0°.

8. Cellule d'affichage à cristaux liquides selon la revendication 1, caractérisée par un angle $\Psi$ de 90°.

FIG. 1

FIG. 2

FIG. 3

TRANSMISSION [%]

SPANNUNG [VOLT]